# EUROPEAN PATENT SPECIFICATION

(11) **EP 3 514 666 B1**
(45) Date of publication and mention of the grant of the patent: **18.03.2020**
(21) Application number: 16891897.7
(22) Date of filing: 17.09.2016
(51) Int. Cl.: G06F 3/041, G06K 9/00

(54) **TOUCH PRESSURE DETECTION MODULE AND DEVICE**
BERÜHRUNGSDRUCKDETEKTIONSMODUL UND VORRICHTUNG
MODULE ET DISPOSITIF DE DÉTECTION DE PRESSION TACTILE

(43) Date of publication of application: 24.07.2019
(73) Proprietor: Shenzhen Goodix Technology Co., Ltd., Shenzhen, Guangdong 518045 (CN)
(72) Inventor: RAN, Rui, Shenzhen Guangdong 518045 (CN); HUANG, Dingxin, Shenzhen Guangdong 518045 (CN)
(74) Representative: Würmser, Julian
(86) International application number: PCT/CN2016/099155
(87) International publication number: WO 2018/049635

(56) References cited:
- WO-A1-2004/057523
- WO-A1-2010/062901
- CN-A- 105 117 065
- CN-A- 105 117 086
- CN-A- 105 138 171
- CN-A- 105 224 129
- CN-A- 105 446 538
- CN-A- 105 809 137
- CN-A- 105 929 577

## Description

### TECHNICAL FIELD

The present application relates to the technical field of pressure detection, and in particular, relates to a touch pressure detection module and apparatus.

### BACKGROUND

A typical touch screen mobile phone generally uses virtual keys that are based on a capacitive touch technology. The operation principles of the virtual keys that are based on the capacitive touch technology lie in that: when a finger touches a key area, the finger touch causes a change of an electric field of sensing electrodes below the key area of the touch screen, and the change of the electric field is converted into a change of a current/voltage signal, which is sensed and responded to by the mobile phone.

During implementing the present application, it is found that a problem existing in the above described technology is that a misoperation may easily happen. For example, firstly, an undesired key response is generated when a finger accidentally touches the key; secondly, an undesired key response is generated when the mobile phone carried by the user is accidentally touched by the body of the user. In the above scenarios, the user has no intention to touch the key, and in such a case the key response brings inconvenience to the user.

WO 2004/057523 A1 discloses an image input apparatus including an image reading assembly positioned below a placement surface on which an object to be examined is placed, and a sensing circuit for sensing that object is placed on the placement surface, in accordance with a pressure applied to the placement surface. A sensing circuit outputs a voltage to at least one of the two sets of electrode lines of pressure sensor. When the figure FN is placed on the image reading circuit and pressure sensor, the pressure of the finger FN makes the sheet member bend, and thus the one of the two sets of electrode lines band downward to contact the other set of electrode lines accordingly. As a consequence, the electrode lines electrically connect to each other. This changes the electrical characteristics such as an electric current flowing through the electrode lines, the voltage or resistance of at least one of the electrode lines. Patents applications CN105138171A, CN105446538A and CN105809137A disclose relevant background art regarding a touch pressure detection apparatus and a fingerprint identification module in the touch technology.

### SUMMARY

Some embodiments of the present invention provide a touch pressure detection module and apparatus, to solve the problem of a misoperation on a virtual key that is based on a capacitive touch technology in the existing art.

An embodiment of the present invention provides a touch pressure detection apparatus, as recited in claim 1.

Another embodiment of the present invention provides a touch terminal, which includes a touch display component assembly. The touch display component assembly includes a display module, a touch module and the touch pressure detection apparatus as described above. One end, including the pressure sensing component, of the touch display component assembly is fixed to a middle frame via an elastomer.

Another embodiment of the present invention provides a touch pressure detection module, as recited in claim 11.

Another embodiment of the present invention provides a fingerprint identification based touch apparatus. The apparatus includes a fingerprint identification module, a control chip and the touch pressure detection module as described above. An output terminal of the touch response component is connected to the control chip, and when the fingerprint identification module is subject to an external pressure, the pressure is transferred to the pressure sensing component of the touch pressure detection module. The control chip is configured to, upon receiving a trigger signal from the touch pressure detection module, determine whether to perform a fingerprint identification operation, and generate a fingerprint identification instruction if it is determined to perform a fingerprint identification operation. The fingerprint identification module is configured to perform the fingerprint identification operation upon receiving the fingerprint identification instruction, and send identified fingerprint information to the control chip.

Another embodiment of the present invention provides a pressure sensing based keypad. The keypad includes a cover and the touch pressure detection module as described above. The pressure sensing component of the touch pressure detection module is attached to a lower surface of the cover.

For the touch pressure detection apparatus according to some embodiments of the present invention, the pressure sensing component is arranged adjacent to the fingerprint identification module. In such a way, when the fingerprint identification module is subject to an external pressure, the pressure is transferred to the pressure sensing component, thereby allowing a touch pressure detection. Therefore, when the touch pressure detection apparatus according to the embodiments of the present invention is used, a press operation needs to be performed on the fingerprint identification module to obtain a response of a pressure event, thereby effectively reducing the probability of a misoperation and saving space.

### BRIEF DESCRIPTION OF THE DRAWINGS

One or more embodiments are shown by way of example, and not by limitation, in the figures of the accompanying drawings, wherein components having the same reference numeral designations represent like components throughout. The drawings are not to scale, unless otherwise disclosed.
FIG. 1 is a schematic diagram of a structure and application of a pressure sensing component based touch pressure detection module according to an embodiment of the present invention;
FIGS. 2A-2B are schematic diagrams of a capacitive pressure detection principle according to an embodiment of the present invention;
FIG. 3 is a schematic diagram of a key touch of a pressure sensing component based touch pressure detection module according to an embodiment of the present invention;
FIG. 4A is a schematic diagram of an equivalent circuit of a capacitive pressure sensing component according to an embodiment of the present invention;
FIG. 4B is a schematic diagram of an equivalent circuit of a capacitive pressure sensing component when being subject to a pressure according to an embodiment of the present invention;
FIG. 5 is a schematic diagram of a connection between a self-capacitive pressure sensing component based touch pressure detection module and a control chip;
FIG. 6 is a schematic diagram of a connection between a mutual-capacitive pressure sensing component based touch pressure detection module and a control chip;
FIG. 7 is a schematic structural diagram of a fingerprint identification based touch apparatus according to an embodiment of the present invention;
FIG. 8 is a schematic flowchart of the above fingerprint identification based touch apparatus;
FIGS. 9-14 are schematic diagrams of a touch pressure detection based touch terminal;
FIGS. 15A-E are schematic diagrams of a connection between a cover and a fingerprint identification module of the touch terminal;
FIG. 16A-D are schematic structural top views of a first substrate and a second substrate of a self-capacitive sensing component in a touch terminal;
FIG. 17A is a schematic structural top view of a first substrate and a second substrate of a mutual-capacitive sensing component in a touch terminal;
FIGS. 17B-C are schematic structural top views of a first electrode and a second electrode of the first substrate of a mutual-capacitive sensing component in a touch terminal;
FIG. 18 is a schematic diagram of a connection between a touch display component assembly and a middle frame in a touch terminal; and
FIG. 19 is a schematic diagram of a sectional structure of a pressure sensing based keypad and a key touch according to an embodiment of the present invention.

### DETAILED DESCRIPTION

In order to make the objectives, technical solutions, and advantages of the present invention clearer, some embodiments of the present invention are further described in details below by reference to exemplary embodiments and the accompanying drawings. It should be understood that the embodiments described here are only exemplary ones for illustrating the present invention, and are not intended to limit the present invention.

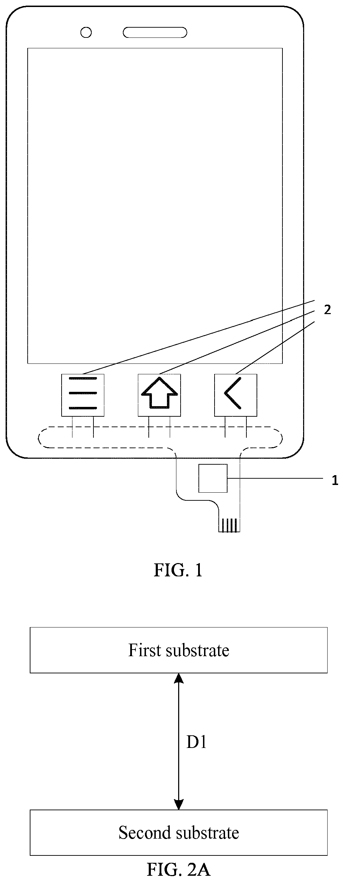

FIG. 1 is a schematic diagram of a structure and application of a pressure sensing component based touch pressure detection module according to an embodiment of the present invention. As shown in FIG. 1, the touch pressure detection module includes a touch response component 1 and a pressure sensing component 2 that are connected to each other. The touch pressure detection module may be arranged in a mobile terminal, for example, a mobile phone, as shown in FIG. 1; the touch response component 1 is configured to detect a pressure applied on the pressure sensing component 2 due to an external press, and determine whether to respond according to a value of the pressure.

The pressure sensing component 2 is configured to output an electrical signal, which is generated due to the pressure applied thereon, to the touch response component 1. The touch response component 1 is configured to calculate, according to a received electrical signal, a capacitance variation value generated due to the pressure applied on the pressure sensing component 2, and calculate a value of the pressure applied on the pressure sensing component 2 according to the capacitance variation value.

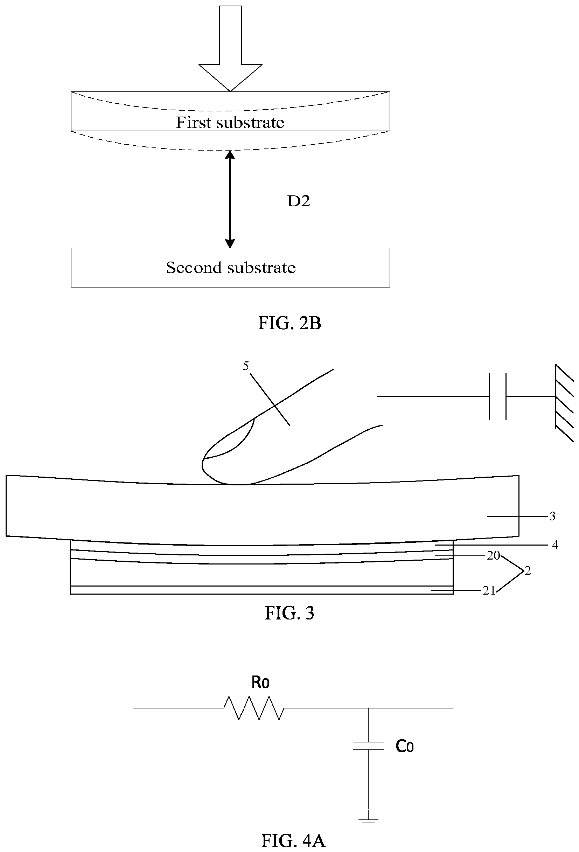

In an embodiment of the present invention, the pressure is detected according to a capacitive principle. FIG. 2A shows a structure of a plate capacitor. A capacitance formula of the plate capacitor is C=εS/Kd, wherein K is a constant, ε indicates a dielectric constant between two substrates, S indicates an area of a substrate, and d indicates a distance between the two substrates. As shown in FIG. 2B, when an external pressure is applied to the plate capacitor, at least one of the two substrates deforms, and the distance between the two substrates changes. For example, the distance between the two substrates decreases from D1 to D2. According to the capacitance formula of the plate capacitor, in this case the capacitance varies. The chip detects a variation of the capacitance by means of circuit detection, so as to calculate a value of the pressure.

Generally, the capacitance detection principles include a self-capacitive detection and a mutual-capacitive detection. For the self-capacitive pressure detection, a driving signal (a transceiving signal) is applied to a first substrate of the two substrates, and a second substrate is grounded; a detection of a variation of the capacitance between the first substrate and the second substrate can be achieved by means of sending and receiving a driving signal through the first substrate. For the mutual-capacitive detection, the first substrate is connected to a driving channel and a driving signal is applied to the first substrate, the second substrate is connected to a sensing channel and a sensing signal is received via the sensing channel. A change of the mutual capacitance between the driving channel and the sensing channel can be detected. Subsequent description of the present application is provided with examples by reference to the self-capacitive detection principle. However, the embodiments of the present invention include, but not limited to, the self-capacitive detection.

The pressure sensing component according to an embodiment of the present invention can use any one of the self-capacitive pressure detection or the mutual-capacitive pressure detection. The self-capacitive pressure detection and the mutual-capacitive pressure detection both follow a principle that when a gap between two capacitive substrates forming a self-capacitive pressure detection structure or a mutual-capacitive pressure detection structure varies due to an external pressure, the capacitance of such a pressure detection structure varies accordingly. The variation of the gap is positively proportional to the pressure. In other words, under a specific condition, a greater pressure results in a greater variation of the gap in the pressure sensing component, and the variation of the capacitance of the pressure sensing component is greater correspondingly. In the subsequent description, the pressure sensing component 2 is described mainly by using the self-capacitive pressure detection as an example. However, for a better understanding of the technical solutions according to the embodiments of the present invention, some technical contents are exemplarily described using the mutual-capacitive pressure detection as examples.

A typical Android mobile phone has three virtual keys that are based on the capacitive touch technology. As shown in FIG. 1, the three rectangular blocks arranged side by side represent three pressure sensing components 2, and each of the pressure sensing components serves as a key for performing a key function. In practice, the number of the pressure sensing components 2 may be determined as required. For example, if only one key is needed on a main panel of a mobile phone, a single pressure sensing component 2isarranged in the touch pressure detection module.

In the embodiment as shown in FIG. 1, each rectangular block has two pins that are led out (herein a mutual-capacitive pressure detection is used as an example for the pressure sensing components 2), and the two pins are respectively connected to the driving channel and the sensing channel of the touch response component 1. The touch response component 1 sends an exciting signal to one pin of each of the pressure sensing components 2, and receives, via another pin of each of pressure sensing components 2, an electrical signal generated due to an external pressure applied on each of the pressure sensing components 2. The touch response component 1 may calculate a capacitance variation value of each of the pressure sensing components 2 according to a variation of the electrical signal generated by each of the pressure sensing components 2, and calculate a value of the pressure applied on each of the pressure sensing components 2.

When the pressure sensing component employs a self-capacitive pressure detection structure, one pin of each of the pressure sensing components 2 acts as a signal transceiver pin and is connected to the touch response component 1, and another pin of each of the pressure sensing components 2 is grounded. The touch response component 1 inputs an exciting signal to each of the pressure sensing components 2 via the signal transceiver pin that is connected to each of the pressure sensing components 2, and receives, via the signal transceiver pin, the electrical signal generated due to the external pressure applied on each of the pressure sensing components 2. The touch response component 1 may calculate a capacitance variation value of each of pressure sensing components 2 according to a variation of the electrical signal generated by each of the pressure sensing components 2, and calculate a value of the pressure applied on each of the pressure sensing components 2.

Typically, a pressure applied unintendedly by a finger touch on a key is less than 100g, while a pressure applied intendedly by a finger touch on a key is greater than 200g. Therefore, to prevent a misoperation, it can be set that a trigger signal of a touch event corresponding to the pressure sensing component 2 is output only when the pressure applied on the pressure sensing component 2 is greater than a first predetermined threshold (for example, 200g), otherwise, no trigger signal is output. In this way, the probability of a misoperation induced by unintended touches on the keys can be lowered. When a plurality of pressure sensing components 2 are included, the touch response component 1 may simultaneously or alternately detect the pressure applied on each of the pressure sensing components 2, which is not limited in the embodiments of the present invention.

In one embodiment, each of the pressure sensing components 2 may correspond to a plurality of touch events. In this case, a corresponding relationship between pressure ranges of the pressure on each of the pressure sensing components 2 and touch events may be prestored in the touch response component 1. In this case, with respect to any one of the pressure sensing components 2, when the pressure applied on the pressure sensing component 2 is greater than the first predetermined threshold, the touch response component 1 outputs a trigger signal of a touch event corresponding to a pressure range in which the pressure applied on the pressure sensing component falls. For example, a pressure P greater than the first predetermined threshold may be divided into three pressure ranges: P<P1, P1≤ P<P2 and P≥P2. With respect to a pressure sensing component 2, the pressure range P<P1 corresponds to a first touch event, the pressure range P1≤P<P2 corresponds to a second touch event, and the pressure range P≥P2 corresponds to a third touch event. If the pressure P applied on the pressure sensing component 2 falls within the pressure range P<P1, the touch response component 1 outputs a trigger signal corresponding to the first touch event; if the pressure P applied on the pressure sensing component 2 falls within the pressure range P1≤P<P2, the touch response component 1 outputs a trigger signal corresponding to the second touch event; and if the pressure P applied on the pressure sensing component 2 falls within the pressure range P≥P2, the touch response component 1 outputs a trigger signal corresponding to the third touch event. In this manner, a same key may trigger different operations when being applied with different pressures. For example, a light press is to perform a preview operation, while a hard press is to perform an open operation, which is similar to responses of the pressure sensing touch screen to different pressures.

FIG. 3 is a schematic diagram of key touch of the pressure sensing component based touch pressure detection module according to an embodiment of the present invention. As shown in FIG. 3, the pressure sensing component 2 is not directly touched by a finger 5, a cover 3 (for example, a cover plate of a mobile phone) is arranged on the pressure sensing component 2; the cover 3 is attached to the pressure sensing component 2 via an adhesive 4, and the finger 5 applies a pressure on the pressure sensing component 2 by touching the cover 3. When the finger 5 touches the cover 3, a pressure is applied on the cover 3, and the pressure is transferred to the pressure sensing component 2 via the cover 3 and the adhesive 4. In some embodiments, the finger may alternatively directly touch the pressure sensing component 2, which is not limited in the embodiments of the present invention.

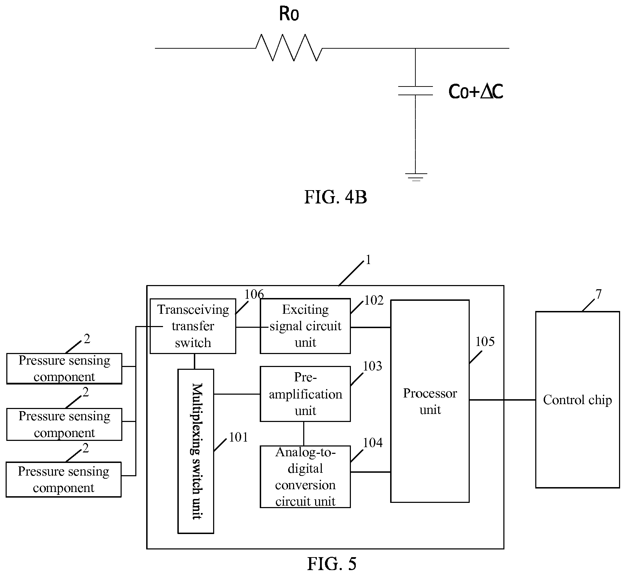

FIG. 4A is a schematic diagram of an equivalent circuit of a capacitive pressure sensing component, and FIG. 4B is a schematic diagram of an equivalent circuit of a capacitive pressure sensing component when being subjected to a pressure. With reference to FIG. 3, FIG. 4A and FIG. 4B, when the finger 5 touches the cover 3, the pressure is transferred to the pressure sensing component 2 via the cover 3 and the adhesive 4, such that the pressure sensing component 2 is subjected to the pressure. In this way, the capacitance C₀ of the pressure sensing component 2 varies, with a variation value of ΔC. That is, the capacitance of the pressure sensing component 2 changes from C₀ to C₀+ΔC.

FIG. 5 is a schematic diagram of a connection between a self-capacitive pressure sensing component based touch pressure detection module and a control chip 7. As shown in FIG. 5, a touch response component 1 includes a processor unit 105, an exciting signal circuit unit 102, a pre-amplification unit 103, an analog-to-digital conversion circuit unit 104 and a transceiving transfer switch 106. The processor unit 105 is connected to an input terminal of the exciting signal circuit unit 102, an output terminal of the exciting signal circuit unit 102 is connected to a first terminal of the transceiving transfer switch 106, a second terminal of the transceiving switch unit 106 is connected to one terminal of a pressure sensing component 2, a third terminal of the transceiving transfer switch 106 is connected to an input terminal of the pre-amplification unit 103, an output terminal of the pre-amplification unit 103 is connected to an input terminal of the analog-to-digital conversion circuit unit 104, and an output terminal of the analog-to-digital conversion circuit unit 104 is connected to the processor unit 105. The processor unit 105 controls the exciting signal circuit unit 102 to input a driving signal to the pressure sensing component 2 via the transceiving transfer switch 106. An electrical signal output by the pressure sensing component 2 is input to the pre-amplification unit 103 via the transceiving switch unit 106, after amplifying the electrical signal, the pre-amplification unit 103 inputs the amplified electrical signal to the analog-to-digital conversion circuit unit 104, and after converting the electrical signal into a digital signal, the analog-to-digital conversion circuit unit 104 inputs the digital signal to the processor unit 105. The processor unit 105 calculates a capacitance variation value of the pressure sensing component 2 according to a variation of the digital signal, and calculates a value of the pressure applied on the pressure sensing component 2 according to the capacitance variation value.

If there is only one pressure sensing component 2, the transceiving transfer switch 106 may be directly connected to the input terminal of the pre-amplification unit 103. When a plurality of pressure sensing components 2 are included, the touch response component 1 further includes a multiplexing switch unit 101. The multiplexing switch unit 101 serves as a multi-channel input and output switch, and can support pressure detections of a plurality of channels (that is, the plurality of pressure sensing components 2). In this case, as shown in FIG. 5, the transceiving transfer switch 106 is connected to the input terminal of the pre-amplification unit 103 via the multiplexing switch unit 101.

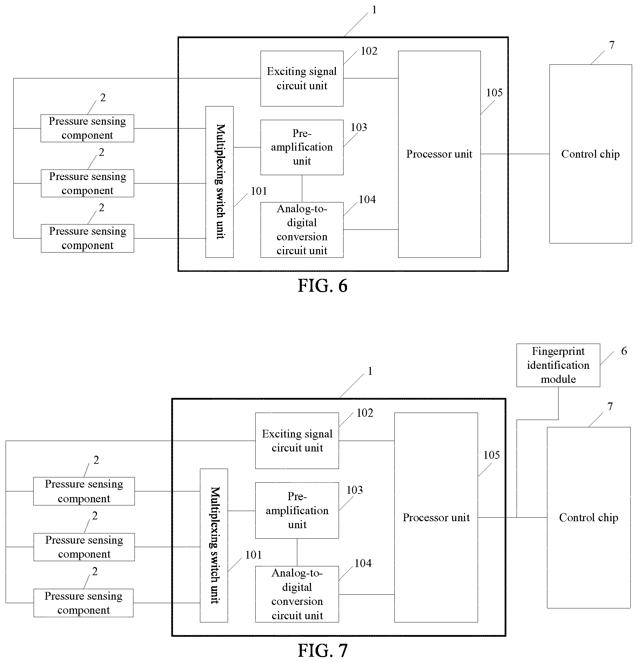

FIG. 6 is a schematic diagram of a connection between a mutual-capacitive pressure sensing component based touch pressure detection module and a control chip 7. As shown in FIG. 6, one terminal of a pressure sensing component 2 is connected to an output terminal of an exciting signal circuit unit 102, and the other terminal of the pressure sensing component 2 is connected to an input terminal of a pre-amplification unit 103; with this configuration, a touch response component 1 applies a driving signal to a driving electrode of the pressure sensing component 2, and receives a sensing signal from a sensing electrode of the pressure sensing component 2. If there is only one pressure sensing component 2, the pressure sensing component 2 may be directly connected to the input terminal of the pre-amplification unit 103. When a plurality of pressure sensing components 2 are included, the touch response component 1 further includes a multiplexing switch unit 101. The multiplexing switch unit 101 serves as a multi-channel input and output switch, and can support pressure detections of a plurality of channels (that is, the plurality of pressure sensing components 2). In this case, as shown in FIG. 6, the pressure sensing components 2 are connected to the input terminal of the pre-amplification unit 103 via the multiplexing switch unit 101.

An electronic device with a typical mechanical key can employ the above touch pressure detection module, for example, a mobile phone, a tablet computer, a laptop computer/desktop computer and the like; and an electronic device with a fingerprint key can also employ the above touch pressure detection module.

As shown in FIG. 7, the above touch pressure detection module can also cooperate with a fingerprint identification module 6 to form a fingerprint identification based touch apparatus. The fingerprint identification based touch apparatus includes the touch pressure detection module, the fingerprint identification module 6 and a control chip 7. When the fingerprint identification module 6 is subject to an external pressure, the pressure is transferred to the pressure sensing component 2of the touch pressure sensing component. An output terminal of the touch response component 1 of the touch pressure detection module is connected to the control chip 7. The control chip 7 is configured to, after receiving a trigger signal of the touch pressure detection module 1, determine whether to perform a fingerprint identification operation. If it is determined that a fingerprint identification operation needs to be performed, the control chip 7generates a fingerprint identification instruction. The fingerprint identification module 6 then performs the fingerprint identification operation upon receiving the fingerprint identification instruction, and sends identified fingerprint information to the control chip 7. The fingerprint identification module 6 is in a sleeping state before receiving the fingerprint identification instruction, and upon receiving the fingerprint identification instruction, the fingerprint identification module 6 exits the sleeping state to perform the fingerprint identification operation. After sending the identified fingerprint identification information to the control chip 7, the fingerprint identification module 6 re-enters the sleeping state.

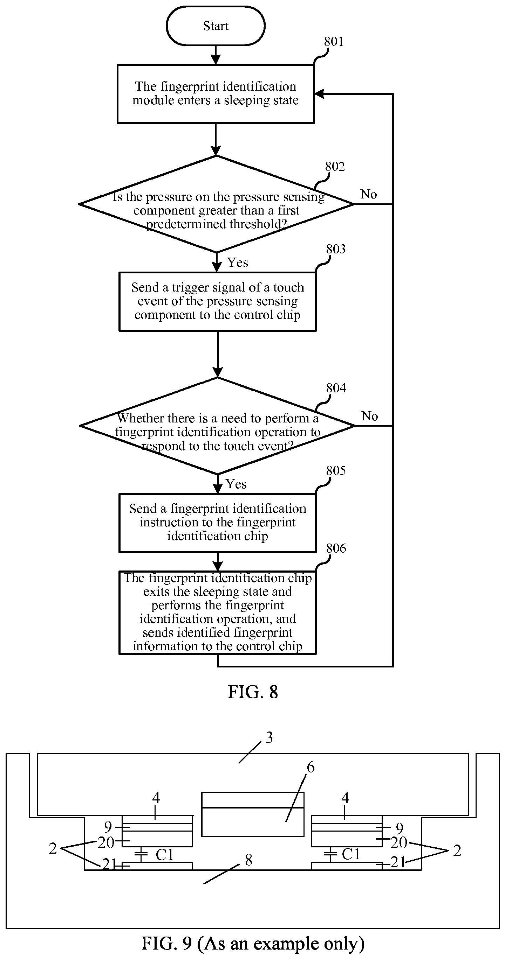

As shown in FIG. 8, the fingerprint identification based touch apparatus operates according to the following procedures:
Step 801: The fingerprint identification module 6 enters a sleeping state, and step 802 is performed.
Step 802: The touch response component 1 detects a pressure on the pressure sensing component 2 according to a preset frequency, and determines whether the pressure on the pressure sensing component 2 is greater than a first predetermined threshold. If the pressure is greater than the first predetermined threshold, step 803 is performed; and if the pressure is less than or equal to the first predetermined threshold, the process returns to step 801. The higher a pressure detection frequency is, the better timeliness of a pressure detection is.
Step 803: The touch response component 1 sends a trigger signal of a touch event of the pressure sensing component 2 to the control chip 7, and then step 804 is performed.
Step 804: The control chip 7 determines whether there is a need to perform a fingerprint identification operation to respond to the touch event. If it is determined that a fingerprint identification operation needs to be performed, step 805 is performed; otherwise, there is no need to perform a fingerprint identification operation, and the process returns to step 801.
Step 805: The control chip 7 sends a fingerprint identification instruction to the fingerprint identification module 6, and then step 806 is performed.
Step 806: After receiving the fingerprint identification instruction sent by the control chip 7, the fingerprint identification module 6 exits the sleeping state and performs the fingerprint identification operation, and sends identified fingerprint information to the control chip 7. Afterwards, the process returns to step 801.

According to the working procedures of the fingerprint identification based touch apparatus, after the touch response component 1 sends the trigger signal to the control chip 7, the control chip 7 may determine, according to a touch event corresponding to the received trigger signal, whether to enable fingerprint identification in response to the touch event. The control chip 7 may send a fingerprint identification instruction to the fingerprint identification module 6 only when the fingerprint identification needs to be enabled in response to the touch event. Therefore, the fingerprint identification module 6 is in the sleeping state in most circumstances, and is awaken to perform a fingerprint identification operation only when a trigger event is generated (that is, the control chip 7 receives a trigger signal of a touch event) and fingerprint identification needs to be enabled (that is, the control chip 7 determines a fingerprint identification operation needs to be performed in response to the touch event). Therefore, system power consumption of the fingerprint identification based touch apparatus may be lowered.

Moreover, in the above working procedures, step 802 is mainly performed to detect a pressure on the pressure sensing component to prevent a misoperation induced by an unintended touch; only when the pressure on the pressure sensing component reaches a specific strength, a trigger signal of a touch event is sent to the control chip. In this way, the probability of a misoperation caused by an unintended touch on a key is lowered.

Detailed above describes the structure and application of the pressure sensing component 2 based touch pressure detection module. The structure and application of another touch pressure detection module having a similar structure to the above described touch pressure detection module are described hereinafter. The touch pressure detection module includes: a pressure sensing component 2and a touch response component 1 that are connected to each other. The pressure sensing component 2 is configured to output an electrical signal, that is generated due to a pressure applied thereon, to the touch response component 1; the touch response component 1 is configured to calculate a capacitance variation value generated due to the pressure according to the electrical signal, and calculate a value of the pressure applied on the pressure sensing component according to the capacitance variation value. As seen from the above description, the logic functions of the pressure sensing component 2 and the touch response component 1 of the touch pressure detection module herein are substantially same as those of the pressure sensing component and the touch response component of the touch pressure detection module as described above. Therefore, the connection structures and signal flow directions between the pressure sensing component 2 and the touch response component 1 of the touch pressure detection module are not further described herein. However, touch manners of the touch pressure detection module according to this embodiment include but not limited to the touch manners of the touch pressure detection module as described above.

A main point of this embodiment is to provide a structure of a touch pressure detection apparatus that is based on the touch pressure detection module as described above. The structure of the pressure sensing component 2 of the touch pressure detection apparatus disclosed in this embodiment is also applicable to the structure of the pressure sensing component 2 of the touch pressure detection module as described above. In this embodiment, the pressure sensing component 2 includes a first substrate and a second substrate that are oppositely arranged, and a variable gap exists between the first substrate and the second substrate. The variable gap varies when the pressure sensing component 2 is subject to a pressure. The touch response component 1 is configured to calculate a value of the pressure applied on the pressure sensing component 2 according to an electrical signal generated due to a variation of the variable gap.

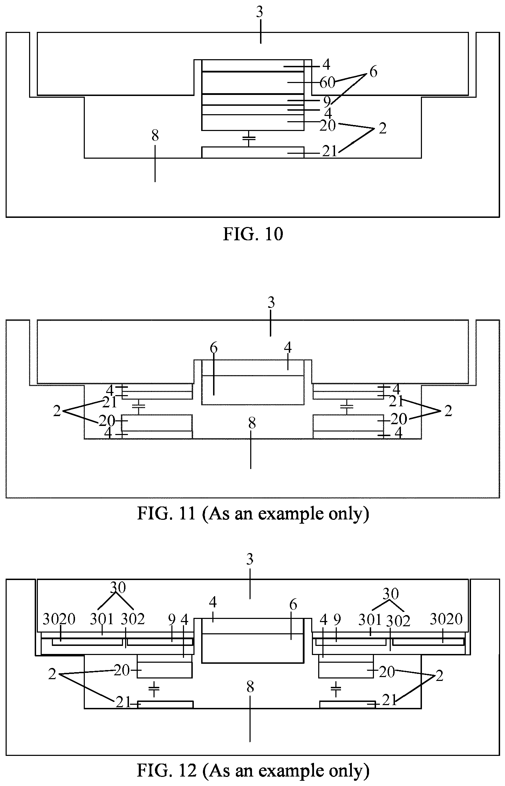

With reference to the above description, that the touch pressure detection apparatus is applied to a terminal may form a touch terminal. For example, the touch terminal may be a mobile phone. Referring to FIG. 9 and FIG. 10, the touch terminal includes: a cover 3, a middle frame 8 and a fingerprint identification module 6.At least one pressure sensing component 2 and the fingerprint identification module 6 are arranged below the cover 3, that is, the at least one pressure sensing component 2 and the fingerprint identification module 6 are arranged between the cover 3 and the middle frame 8. The at least one pressure sensing component 2 is arranged adjacent to the fingerprint identification module 6. For example, in the embodiment as shown in FIG. 9 (as an example), two pressure sensing components 2 are respectively arranged at two opposite sides of the fingerprint identification module 6. Alternatively, in the embodiment as shown in FIG. 10, a single pressure sensing component 2 is arranged below the fingerprint identification module 6.

In addition, the cover 3 may be a cover glass of a touch screen, a recess may be formed at a bottom surface of the cover 3 (that is, the surface facing the middle frame 8) in an area where the fingerprint identification module 6 is located. The fingerprint identification module 6 may be received in the recess, and be attached and fixed to an inner wall of the recess via an adhesive 4. With this structure, the cover 3 may provide a finger press area and a fingerprint collection interface for the fingerprint identification module 6; a user may press the surface of the cover 3 with a finger when performing fingerprint identification. The fingerprint identification module 6 acquires fingerprint information of the finger of the user via the cover 3. Since the fingerprint identification module 6 is arranged below the cover glass of the touch screen, no through hole needs to be provided in the cover of the touch terminal to receive the fingerprint identification module 6, and no additional ceramic cover, cover glass or sapphire cover is needed. In this way, an invisible fingerprint sensor (IFS) structure is defined.

Since the pressure sensing component 2 is arranged adjacent to the fingerprint identification module 6, when the fingerprint identification module 6 is subject to an external pressure, the pressure is transferred to the pressure sensing component 2 of the touch pressure detection module via the cover 3 or the fingerprint identification module 6, such that the variable gap between the first substrate 20 and the second substrate 21 varies due to the pressure. The pressure sensing component may be arranged in any one of the following manners. As shown in FIG. 9 (as an example), the first substrate 20 of the pressure sensing component 2 is arranged on the cover 3, and the second substrate 21 of the pressure sensing component 2 is arranged on the middle frame 8. In one alternative embodiment, the positions of the first substrate 20 and the second substrate 21 (as shown in FIG. 9) may be exchanged. That is, as shown in FIG. 11 (as an example), the first substrate 20 of the pressure sensing component is arranged on the middle frame 8, and the second substrate 21 thereof is arranged on the cover 3. In another alternative embodiment, the first substrate 20 and the second substrate 21 of the pressure sensing component may also be arranged between the fingerprint identification module 6 and the middle frame 8. As shown in FIG. 10, the first substrate 20 of the pressure sensing component is arranged on a bottom of the fingerprint identification module 6, and the second substrate 21 thereof is arranged on the middle frame 8; or, the positions of the first substrate and the second substrate(as shown in FIG. 10) may also be exchanged. That is, the first substrate 20 of the pressure sensing component is arranged on the middle frame and the second substrate 21 thereof is arranged on the bottom of the fingerprint identification module 6.

When the touch pressure detection module includes a plurality of pressure sensing components, the first substrates 20 of the pressure sensing components 2 are, for example, arranged on the cover 3 and distributed on two symmetric sides of the fingerprint identification module 6. In this case, the multiplexing switch unit 101 (as shown in FIG. 5 or FIG. 6) may be included in the touch response component 1. The multiplexing switch unit 101 serves as a multi-channel input and output switch, and can support pressure detections of a plurality of channels (that is, the plurality of pressure sensing components 2).

As shown in FIG. 9 and FIG. 10, a variable gap exists between the first substrate 20 and the second substrate 21 of the pressure sensing component 2. In practice, the variable gap may be an air gap; alternatively, an insulating elastomer, for example, an elastic foam, may be filled between the first substrate 20 and the second substrate 21.

The cover 3 and the pressure sensing component 2 are attached to each other via an adhesive 4, and the adhesive 4 may for example be a backing adhesive. The finger applies a pressure to the pressure sensing component 2 by touching the cover 3. When the finger touches the cover 3, a pressure is applied on the cover 3, and the pressure is transferred to the pressure sensing component 2 via the cover 3 and the adhesive 4, such that the pressure is eventually transferred to the pressure sensing component 2. As such, the variable gap of the pressure sensing component 2 varies due to the pressure applied on the cover 3. Generally, the variable gap becomes narrow due to the effect of the pressure, such that the capacitance between the first substrate 20 and the second substrate 21 is increased. The touch response component 1 detects the capacitance of the pressure sensing component 2 at a specific frequency. When a width of the variable gap is reduced to a threshold, the touch response component 1 sends a trigger signal to the control chip 7.

As shown in FIG. 9 (as an example), when the first substrate 20 of the pressure sensing component 2 is fixed to the cover 3, the second substrate 21 of the pressure sensing component 2 is fixed to the middle frame 8. As such, a variable gap may be formed between the first substrate 20 and the second substrate 21 due to a gap between the cover 3 and the middle frame 8. When the variable gap is an air gap, the second substrate 21 may be independent of the touch pressure detection module and practiced as a single ground layer. Therefore, the second substrate 21 using the ground layer may be independently fixed to the middle frame 8, for example, attached to the middle frame 8 via the adhesive 4.

In the embodiment as shown in FIG. 9 (as an example), when the first substrate 20, which is configured as a transceiver electrode, is fixed to the cover 3, the pressure sensing component 2 may be subject to touch interference by the finger on the cover 3, thereby causing undesired variations of the capacitance of the pressure sensing component 2. The touch response component 1 is incapable of distinguishing whether the capacitance variations are caused by the finger touch or by normal finger press, this may affect accuracy of determination of the touch response component 1. Therefore, a shielding layer 9 may be added in the touch terminal. As shown in FIG. 9, the shielding layer 9 is arranged between the cover 3 and the first substrate 20 of the pressure sensing component 2, to shield the interference caused by finger touch.

In practice, the first substrate 20 serving as the transceiver electrode may be made by using a flexible circuit board. For example, a flexible circuit board including two layers of wirings may be employed. One layer is used for making the first substrate 20, and the other layer is used as the shielding layer 9, and is grounded. Nevertheless, the first substrate 20 and the shielding layer 9 may also be made by using a double-layer indium tin oxide (ITO) or silver film (AG film), and the circuit structure thereof is similar to the structure of the flexible circuit board, which is thus not described herein any further.

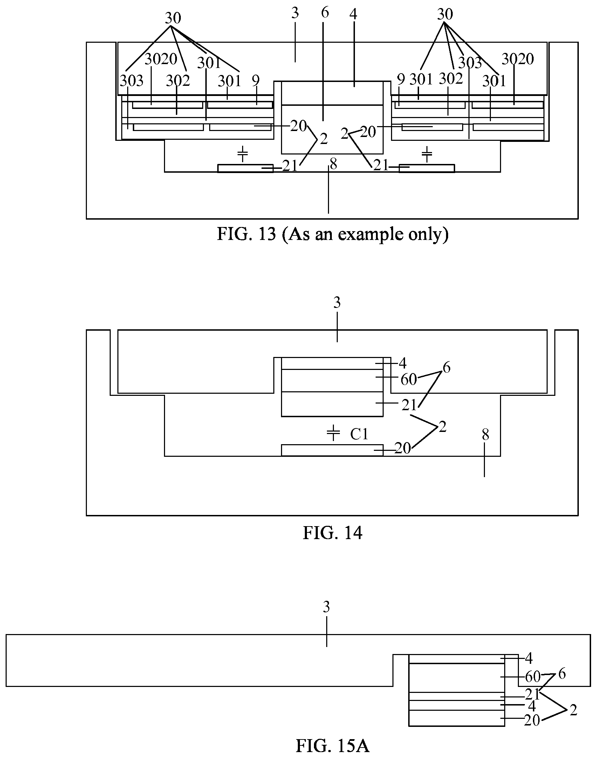

At present, in relative to an oncell type or an incell type touch display screen, an outcell type capacitive touch screen is extensively used. The cover of an outcell type capacitive touch screen is generally provided with a wiring layer. As shown in FIG. 12 and FIG. 13 (as an example), wiring layers of the pressure sensing component 2 and the cover 3may be combined, such that the cost is reduced and the manufacture process is simplified. For example, when the touch terminal employs a display module using a glass-film (G-film) structure, a one glass solution (OGS) structure or a single indium tin oxide (SITO) structure, the shielding layer 9 (i.e., the ground layer GND) may be made in the wiring layer. As such, the first substrate 20 of the pressure sensing component 2 can be made only using a single layer flexible circuit board, and when the flexible circuit board is assembled to the touch terminal, there is no need to consider about whether the shielding layer 9 of the double layer flexible circuit board is arranged above the first substrate 20. This can simplify the manufacture process and reduce the cost.

(As an example) FIG. 12 is a schematic structural diagram of arranging a shielding layer in a display module using the G-film structure. The arrangement of the shielding layer in a display module using the OGS structure or the SITO structure is not described any further. In FIG. 12, a wiring layer 30 includes an optical clear adhesive (OCA) layer 301 and a first thin film layer 302. A touch channel wiring layer 3020 and a ground layer are arranged in the first thin film layer 302, and the ground layer can be reused as the shielding layer 9.

(As an example) Alternatively, when the touch terminal includes a display module using a glass-film-film (GFF) structure, the shielding layer 9 and the first substrate 20 of the pressure sensing component 2 may also be made in the wiring layer 30. FIG. 13 is a schematic structural diagram of arranging a shielding layer 9 and a first substrate 20 in a touch display module using the GFF structure. The shielding layer 9 is arranged above the first substrate 20. As shown in FIG. 13, the wiring layer 30 includes an OCA (Optical Clear Adhesive) layer 301, a first thin film layer 302 and a second thin film layer 303. In addition, another OCA layer 301 may be further included and arranged between the first thin film layer 302 and the second thin film layer 303. A ground layer is arranged in the first thin film layer 302. The ground layer may be reused as the shielding layer 9. A touch channel wiring layer 3020 is arranged in both the first thin film layer 302 and the second thin film layer 303, and the first substrate 20 of the pressure sensing component 2 can be further arranged in the second thin film layer 303.

In practice, when a wiring layer 30 is arranged on the cover 3, the pressure sensing component 2 may also be arranged between the wiring layer 30 and the middle frame. In one embodiment, the first substrate 20 of the pressure sensing component 2 may be arranged in the wiring layer 30, and the second substrate 21 thereof is arranged on the middle frame. In one alternative embodiment, the first substrate 20 of the pressure sensing component is arranged on the middle frame, and the second substrate 21 thereof is arranged in the wiring layer 30. In some other alternative embodiments, the shielding layer 9 and the wiring layer 30 may also be independently arranged. In those cases, the shielding layer 9 maybe arranged between the first substrate 20 and the wiring layer 30.

FIG. 10 is a schematic structural diagram of a touch terminal with the first substrate 20 and the second substrate 21 of the pressure sensing component 2 arranged between the fingerprint identification module 6 and the middle frame 8. Generally, the fingerprint identification module 6 includes a fingerprint identification chip 60 and a reinforcing steel sheet. The reinforcing steel sheet can be reused as the shielding layer 9. The fingerprint identification chip 60 is arranged between the cover 3 and the reinforcing steel sheet, and the first substrate 20 and the second substrate 21 of the pressure sensing component 2 are both arranged below the fingerprint identification chip 60. In practice, the reinforcing steel sheet of the fingerprint identification module 6 can be integrated with the first substrate 21 or the second substrate 21 of the pressure sensing component 2, so as to simplify the manufacture process. Generally, the reinforcing steel sheet under the fingerprint identification chip 60 is grounded, and elements of the fingerprint identification module 6 can be fixed to and supported by the reinforcing steel sheet. In addition, since the reinforcing steel sheet is grounded, the reinforcing steel sheet can be used as a shielding layer 9 of the first substrate 20.

Alternatively, as shown in FIG. 14, the first substrate 20 of the pressure sensing component 2 can also be attached to the middle frame 8 via the adhesive 4. In this case, the reinforcing steel sheet is used as the second substrate 21 (the ground electrode) of the pressure sensing component 2. Moreover, a stimulating signal may be further input to the reinforcing steel sheet, such that the reinforcing steel sheet acts as the first substrate 20 of the pressure sensing component 2, and thus forms a plate capacitor with the ground layer on the middle frame 8. In this case, the fingerprint identification module 60 may be used as the shielding layer 9 of the first substrate 20 of the pressure sensing component 2. An integration of the fingerprint identification module 6 with the first substrate 20 or the second substrate 21 of the pressure sensing component 2 may simplify the manufacture process and reduce the cost.

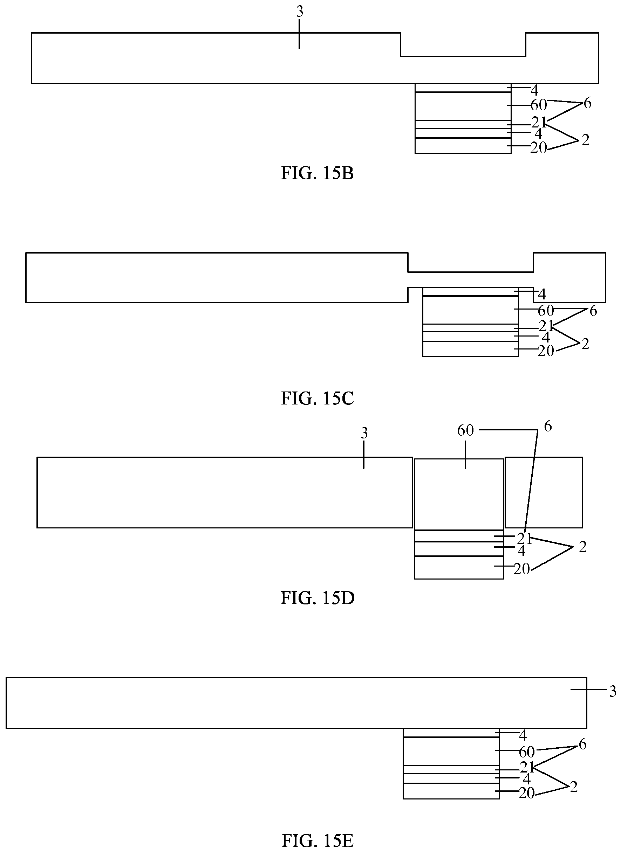

In the touch terminal as described above, when the fingerprint identification module and the pressure sensing component of the touch pressure detection module are integrated, to improve the signal volume and signal-to-noise ratio of the fingerprint identification module, it is desired to make the cover thinner. FIGS. 15A-15D respectively illustrate four solutions of thinning the cover. In FIG. 15A and FIG. 15B, a blind via is respectively arranged in an upper surface and a lower surface of an area of the cover corresponding to the fingerprint identification module 6. In FIG. 15C, blind vias are both arranged in an upper surface and a lower surface of an area of the cover corresponding to the fingerprint identification module 6. In FIG. 15D, a through hole corresponding to the fingerprint identification module 6 is arranged in the cover 3. In practice, as shown in FIG. 15E, the cover 3 may be employed in the touch terminal without being thinned. In such a case, there is no need to form a blind via or a through hole in the upper or lower surfaces at an area of the cover 3 corresponding to the fingerprint identification module 6. In FIGS. 15A-15E, the reinforcing steel sheet of the fingerprint identification module 6 is reused as the second substrate 21 of the pressure sensing component 2, and the first substrate 20 of the pressure sensing component 2 is attached to the reinforcing steel sheet via the adhesive 4. The fingerprint identification chip 60 is attached to the cover 3 via the adhesive 4.

In the touch terminal as described above, generally, the first substrate 20 of the pressure sensing component 2 employs a solid rectangular shape, to satisfy requirements on the capacitance variation range of the touch response component 1. However, in practice, to improve the detection precision, it is desired to reduce the parasitic capacitance between the first substrate 20 and the second substrate 21. With respect to a self-capacitive pressure detection structure, the ground capacitance of the first substrate 20 is reduced, so as to expand the detected capacitance variation range. As such, the shape of the first substrate 20 can be designed. With respect to the self-capacitive pressure detection structure, the second substrate 21 is a ground electrode, which may be any shape as long as the substrate is grounded.

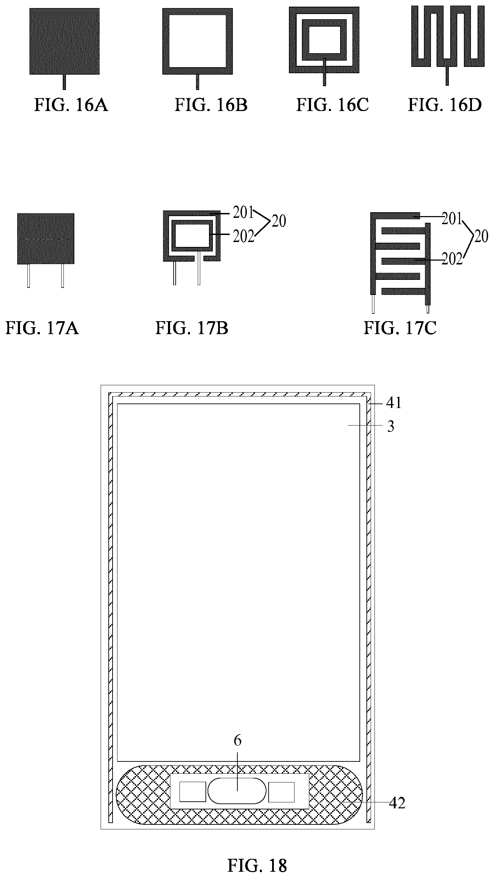

Using a self-capacitive pressure detection structure as an example, as shown in FIG. 16A, the first substrate 20 is in a rectangular shape; as shown in FIG. 16B, the first substrate 20 is in a rectangle-shaped mouth shape; and as shown in FIG. 16C, the first substrate 20 is in a shape of two nested rectangle-shaped mouths, which is formed by excavating a small solid rectangle in a larger solid rectangle. As shown in FIG. 16D, the first substrate 20 is in a meander shape.

Using a mutual-capacitive pressure detection structure as an example, as shown in FIG. 17A, the first substrate 20 and the second substrate 21 of the pressure sensing component 2, which employs the mutual-capacitive pressure detection structure, are parallel to each other and are rectangular shape. The first substrate 20 is connected to a driving channel of the touch response component 1, and the second substrate 21 is connected to a sensing channel of the touch response component 1. Alternatively, as shown in FIG. 17B, the first substrate 20 may be designed in such a manner that the first substrate 20 includes a first electrode 201 and a second electrode 202 that are arranged in a same plane and are in a shape of two nested rectangle-shaped mouths, and the second substrate 21 is grounded; the second substrate 21 and the first substrate 20 form a plate capacitor. Alternatively, as shown in FIG. 17C, the first substrate 20 may be designed in such a manner that the first substrate 20 includes a first electrode 201 and a second electrode 202 that are arranged in a same plane and both in an E shape, the first electrode 201 and the second electrode 202 are meshed each other, and the second substrate 21 is grounded; the first substrate 20 and the second substrate 21 form a plate capacitor. Detailed above are only examples for illustration purpose, and the shape and position relationship of the first substrate 20 and the second substrate 21 are not limited to the above.

Generally, the touch terminal as described above further includes a display module and a touch module. Generally, the cover, the touch module, the display module and the touch pressure detection module form a touch display component assembly. The touch display component assembly is generally attached and fixed to the middle frame of the touch terminal by means of adhesive dispensing. That is, four sides of the touch display component assembly (for example, four sides of the cover) are all fixed to the middle frame by means of adhesive dispensing. In the case that the touch display component assembly is assembled using this adhesive dispensing, when the cover is pressed by a finger, the physical deformation induced at an area (that is, a key area) of the fingerprint identification module is very small. Generally, a 1 kilogram pressure may generate a physical deformation less than 10 microns. In this case, to detect very small deformation signals, the touch response component needs to have a high performance, and the small deformation space is divided into a plurality of pressure grades. As a result, the calculation complexity is even higher.

To increase the physical deformation of the touch display component assembly under a unit pressure, in one embodiment, as shown in FIG. 18, one end (i.e., the end at which the first substrate and the second substrate are arranged), including the pressure sensing component, of the touch display component assembly is fixed to the middle frame via an elastomer 42, and the other parts of the touch display component assembly can be still fixed to the middle frame via an adhesive dispensing layer 41. The elastomer is, for example, a compressed double-faced adhesive foam material. The touch terminal having such touch display component assembly fixing structure not only ensures reliability of assembling of the touch display component assembly, but also increases the physical deformation when the touch display component assembly is subjected to a pressure in the area of the fingerprint identification module. Upon practical tests, under a pressure of 1 kilogram, the physical deformation of the touch display component assembly attached to the middle frame using the elastomer is multiple times of the physical deformation of the touch display component assembly employing the adhesive dispensing technique.

In practice, in the terminal device as described above, the touch response component and the fingerprint identification chip of the fingerprint identification module may be integrated in a same physical chip. Optionally, the touch response component and a touch chip of the touch module may also be integrated in a same physical chip. As such, the number of chips in the touch terminal may be reduced, which simplifies the manufacture process of the touch terminal.

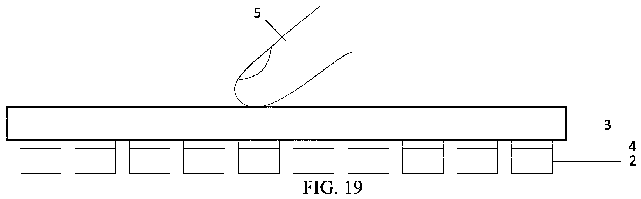

As described above, when the touch pressure detection module is applied to a keypad, a pressure sensing based keypad may be obtained. According to the schematic diagram illustrating a sectional structure and key touch of the keypad as shown in FIG. 19, the keypad includes a cover 3 and the above described touch pressure detection module. The pressure sensing components 2 of the touch pressure detection module are attached on a lower surface of the cover via adhesive 4, and each pressure sensing component 2 is in relevant to a key. When a key needs to be tapped, the position over the corresponding pressure sensing component 2 on the cover 3 only needs to be touched, and the key can be triggered by a suitable pressure applied thereon.

The steps in the above methods are for clear illustration merely, and in practice, the steps may be combined into one step or some step may be split into a plurality of steps. These steps, as long as observing the same logical relationship, all fall within the protection scope of the present invention. Any non-mandatory modifications added to the algorithms or procedures or any optional designs introduced to the same shall fall within the protection scope of the present invention as long as the core design of the algorithms and procedures is not changed.

Persons skilled in the art should understand that all or a part of the steps of the method in the above embodiments may be implemented by a program instructing relevant hardware. The program is stored in a storage medium, and includes several instructions to instruct a device (for example, a single-chip microcomputer or a chip) or processor to execute all or a part of the steps of the method in each embodiment of the present application. The storage medium includes various media capable of storing program code, for example, a USB flash disk, a removable hard disk, a read-only memory (ROM), a random access memory (RAM), a magnetic disk, or an optical disc.

Finally, it should be noted that the above embodiments are merely used to illustrate the technical solutions of the present application rather than limiting the technical solutions of the present application. Although the present application is described in detail with reference to the foregoing embodiments, persons of ordinary skill in the art should understand that they may still make modifications to the technical solutions described in the above embodiments, or make equivalent replacements to some of the technical features; however, such modifications or replacements do not cause the essence of the corresponding technical solutions to depart from scope as defined by the attached claims.

## Claims

1. A touch pressure detection apparatus, comprising: a cover (3), a fingerprint identification module (6), a touch response component (1) and a pressure sensing component (2);
wherein the pressure sensing component (2) and the fingerprint identification module (6) are arranged below the cover (3), and the pressure sensing component (2) is arranged below the fingerprint identification module (6);
the pressure sensing component (2) comprises a first substrate (20) and a second substrate (21) that are oppositely arranged;
a variable gap exists between the first substrate (20) and the second substrate (21); and
when the fingerprint identification module (6) is subject to an external pressure, the pressure is transferred to the pressure sensing component (2) such that the variable gap between the first substrate (20) and the second substrate (21) changes due to the pressure;
wherein a recess is formed at a bottom surface of the cover (3), the fingerprint identification module (6) is received in the recess, and the cover (3) provides a fingerprint collection interface for the fingerprint identification module (6);
the touch pressure detection apparatus is applied to a touch terminal, the touch terminal comprises a middle frame (8), the cover (3) is a cover glass of a touch screen;
the first substrate (20) and the second substrate (21) are arranged between the cover (3) and the middle frame (8);
the fingerprint identification module (6) comprises a fingerprint identification chip (60) and a reinforcing steel sheet;
the fingerprint identification chip (60) is arranged between the cover (3) and the reinforcing steel sheet;
the reinforcing steel sheet is grounded and reused as the second substrate (21) of the pressure sensing component (2), and the first substrate (20) of the pressure sensing component (2) is arranged on the middle frame (8), wherein the second substrate (21) comprises a ground electrode of the pressure sensing component (2); or
the reinforcing steel sheet is connected to the touch response component (1) and reused as the first substrate (20) of the pressure sensing component (2), and the second substrate (21) of the pressure sensing component (2) is arranged on the middle frame (8), wherein the first substrate (20) comprises a transceiver electrode of the pressure sensing component (2).

2. The touch pressure detection apparatus according to claim 1, wherein the first substrate (20) of the pressure sensing component (2) is arranged on the cover (3) and the second substrate (21) of the pressure sensing component (2) is arranged on the middle frame (8); or
the first substrate (20) of the pressure sensing component (2) is arranged on the middle frame (8) and the second substrate (21) of the pressure sensing component (2) is arranged on the cover (3); or
the first substrate (20) of the pressure sensing component (2) is arranged on the fingerprint identification module (6) and the second substrate (21) of the pressure sensing component (2) is arranged on the middle frame (8); or
the first substrate (20) of the pressure sensing component (2) is arranged on the middle frame (8) and the second substrate (21) of the pressure sensing component (2) is arranged on the fingerprint identification module (6).

3. The touch pressure detection apparatus according to claim 1, wherein the touch terminal further comprises a wiring layer (30), wherein the wiring layer (30) is arranged below the cover (3);
wherein the first substrate (20) of the pressure sensing component (2) is arranged in the wiring layer (30) and the second substrate (21) of the pressure sensing component (2) is arranged on the middle frame (8); or
the first substrate (20) of the pressure sensing component (2) is arranged on the middle frame (8) and the second substrate (21) of the pressure sensing component (2) is arranged in the wiring layer (30).

4. The touch pressure detection apparatus according to claim 1 or 2, wherein the touch terminal further comprises a shielding layer (9), and the first substrate (20) comprises a transceiver electrode of the pressure sensing component (2);
no wiring layer (30) is arranged below the cover (3), the shielding layer (9) is arranged between the cover (3) and the first substrate (20), the shielding layer (9) and the first substrate (20) are arranged below the cover (3).

5. The touch pressure detection apparatus according to claim 3, wherein the touch terminal further comprises a shielding layer (9), and the first substrate (20) comprises a transceiver electrode of the pressure sensing component (2);
a wiring layer (30) is arranged below the cover (3), the shielding layer (9) is arranged in the wiring layer (30) and the first substrate (20) is arranged below the wiring layer (30); or
the shielding layer (9) and the first substrate (20) are arranged in the wiring layer (30), and the first substrate (20) is arranged below the shielding layer (9); or
the shielding layer (9) is arranged between the wiring layer (30) and the first substrate (20), and the shielding layer (9) and the wiring layer (30) are arranged below the cover (3).

6. The touch pressure detection apparatus according to any one of claims 1 to 5, wherein the second substrate (21) comprises a ground electrode of the pressure sensing component (2) and the first substrate (20) comprises a transceiver electrode of the pressure sensing component (2), the first substrate (20) is in any one of the following shapes: a rectangular shape, a rectangle-shaped mouth shape, a shape of two nested rectangle-shaped mouths, and a meander shape.

7. The touch pressure detection apparatus according to any one of claims 1 to 5, wherein the first substrate (20) and the second substrate (21) are parallel to each other and are both of a rectangular shape, the first substrate (20) is connected to a driving channel of the touch response component (1), and the second substrate (21) is connected to a sensing channel of the touch response component (1); or
the first substrate (20) comprises a first electrode (201) and a second electrode (202) that are arranged in a same plane and in a shape of two nested rectangle-shaped mouths, and the second substrate (21) is grounded; or
the first substrate (20) comprises a first electrode (201) and a second electrode (202) that are arranged in a same plane and both in an E shape, the first electrode (201) and the second electrode (202) are meshed each other, and the second substrate (21) is grounded;
wherein the first electrode (201) is connected to a driving channel of the touch response component (1), and the second electrode (202) is connected to a sensing channel of the touch response component (1).

8. A touch terminal, comprising a touch display component assembly, wherein the touch display component assembly comprises a display module, a touch module and a touch pressure detection apparatus according to any one of claims 1 to 7;
wherein one end of the touch display component assembly, which comprises a pressure sensing component (2), is fixed to the middle frame (8) via an elastomer (42).

9. The touch terminal according to claim 8, wherein the touch pressure detection apparatus further comprises a touch response component (1) connected to the pressure sensing component (2);
wherein when the variable gap between the first substrate (20) and the second substrate (21) changes due to the pressure applied thereon, the pressure sensing component (2) has a change in capacitance and outputs a corresponding electrical signal, and
wherein the touch response component (1) is configured to:
calculate, according to the electrical signal, a capacitance variation value that is generated by the pressure applied on the pressure sensing component (2), and
calculate, according to the capacitance variation value, a value of the pressure applied on the pressure sensing component (2).

10. The touch terminal according to claim 9, wherein the touch response component (1) and a fingerprint identification chip (60) of the fingerprint identification module (6) are integrated in a same physical chip; or
the touch response component (1) and a touch chip of the touch module are integrated in a same physical chip.

11. A touch pressure detection module, applied to the touch pressure detection apparatus according to any one of claims 1 to 7, comprising the pressure sensing component (2) and the touch response component (1) that are connected to each other;
wherein the pressure sensing component (2) is configured to output an electrical signal, which is generated due to a pressure applied thereon, to the touch response component (1); and
wherein the touch response component (1) is configured to:
calculate, according to the electrical signal, a capacitance variation value that is generated by the pressure applied on the pressure sensing component (2), and
calculate, according to the capacitance variation value, a value of the pressure applied on the pressure sensing component (2); and
output a trigger signal of at least one touch event;
a corresponding relationship between a pressure range and a touch event is pre-stored in the touch response component (1), and wherein when the pressure is greater than a first predetermined threshold, the touch response component (1) outputs the trigger signal;
wherein the trigger signal indicates a pressure range of the value of the pressure.

12. A fingerprint identification based touch apparatus, comprising:
a fingerprint identification module (6), a control chip (7) and the touch pressure detection module according to claim 11;
wherein an output terminal of the touch response component (1) is connected to the control chip (7), and wherein when the fingerprint identification module (6) is subject to an external pressure, the pressure is transferred to the pressure sensing component (2) of the touch pressure detection module;
wherein the control chip (7) is configured to:
upon receiving the trigger signal from the touch pressure detection module, determine whether to perform a fingerprint identification operation, and
generate a fingerprint identification instruction if it is determined to perform a fingerprint identification operation; and
wherein the fingerprint identification module (6) is configured to:
perform the fingerprint identification operation upon receiving the fingerprint identification instruction, and
send identified fingerprint information to the control chip (7).

13. The fingerprint identification based touch apparatus according to claim 12, wherein the fingerprint identification module (6) is configured to:
be in a sleeping state before receiving the fingerprint identification instruction;
exit the sleeping state and perform the fingerprint identification operation upon receiving the fingerprint identification instruction; and
re-enter the sleeping state after sending the identified fingerprint information to the control chip (7).

## Patentansprüche

1. Berührungsdruckdetektionseinrichtung, umfassend: eine Abdeckung (3), ein Fingerabdruckidentifizierungsmodul (6), eine Berührungsreaktionskomponente (1) und eine Druckerfassungskomponente (2);
wobei die Druckerfassungskomponente (2) und das Fingerabdruckidentifizierungsmodul (6) unter der Abdeckung (3) angeordnet sind und die Druckerfassungskomponente (2) unter dem Fingerabdruckidentifizierungsmodul (6) angeordnet ist;
wobei die Druckerfassungskomponente (2) ein erstes Substrat (20) und ein zweites Substrat (21) umfasst, die einander gegenüberliegend angeordnet sind;
wobei ein variabler Spalt zwischen dem ersten Substrat (20) und dem zweiten Substrat (21) vorhanden ist; und
wobei, wenn das Fingerabdruckidentifizierungsmodul (6) einem Druck von außen unterliegt, der Druck auf die Druckerfassungskomponente (2) übertragen wird, sodass sich der variable Spalt zwischen dem ersten Substrat (20) und dem zweiten Substrat (21) aufgrund des Drucks verändert;
wobei eine Aussparung an einer unteren Fläche der Abdeckung (3) gebildet ist, das Fingerabdruckidentifizierungsmodul (6) in der Aussparung aufgenommen ist und die Abdeckung (3) eine Fingerabdrucksammelschnittstelle für das Fingerabdruckidentifizierungsmodul (6) bereitstellt;
wobei die Berührungsdruckdetektionseinrichtung auf ein Berührungsterminal angewandt wird, das Berührungsterminal einen mittleren Rahmen (8) umfasst, die Abdeckung (3) ein Abdeckglas eines Berührungsbildschirms ist;
wobei das erste Substrat (20) und das zweite Substrat (21) zwischen der Abdeckung (3) und dem mittleren Rahmen (8) angeordnet sind;
wobei das Fingerabdruckidentifizierungsmodul (6) einen Fingerabdruckidentifizierungschip (60) und eine Armierungsstahlplatte umfasst;
wobei der Fingerabdruckidentifizierungschip (60) zwischen der Abdeckung (3) und der Armierungsstahlplatte angeordnet ist;
wobei die Armierungsstahlplatte geerdet ist und als das zweite Substrat (21) der Druckerfassungskomponente (2) wiederverwendet wird und das erste Substrat (20) der Druckerfassungskomponente (2) auf dem mittleren Rahmen (8) angeordnet ist, wobei das zweite Substrat (21) eine Erdungselektrode der Druckerfassungskomponente (2) umfasst; oder
wobei die Armierungsstahlplatte mit der Berührungsreaktionskomponente (1) verbunden ist und als das erste Substrat (20) der Druckerfassungskomponente (2) wiederverwendet wird und das zweite Substrat (21) der Druckerfassungskomponente (2) auf dem mittleren Rahmen (8) angeordnet ist, wobei das erste Substrat (20) eine Sendeempfängerelektrode der Druckerfassungskomponente (2) umfasst.

2. Berührungsdruckdetektionseinrichtung nach Anspruch 1, wobei das erste Substrat (20) der Druckerfassungskomponente (2) auf der Abdeckung (3) angeordnet ist und das zweite Substrat (21) der Druckerfassungskomponente (2) auf dem mittleren Rahmen (8) angeordnet ist; oder
wobei das erste Substrat (20) der Druckerfassungskomponente (2) auf dem mittleren Rahmen (8) angeordnet ist und das zweite Substrat (21) der Druckerfassungskomponente (2) auf der Abdeckung (3) angeordnet ist; oder
wobei das erste Substrat (20) der Druckerfassungskomponente (2) auf dem Fingerabdruckidentifizierungsmodul (6) angeordnet ist und das zweite Substrat (21) der Druckerfassungskomponente (2) auf dem mittleren Rahmen (8) angeordnet ist; oder
wobei das erste Substrat (20) der Druckerfassungskomponente (2) auf dem mittleren Rahmen (8) angeordnet ist und das zweite Substrat (21) der Druckerfassungskomponente (2) auf dem Fingerabdruckidentifizierungsmodul (6) angeordnet ist.

3. Berührungsdruckdetektionseinrichtung nach Anspruch 1, wobei das Berührungsterminal ferner eine Verdrahtungsschicht (30) umfasst, wobei die Verdrahtungsschicht (30) unter der Abdeckung (3) angeordnet ist;
wobei das erste Substrat (20) der Druckerfassungskomponente (2) in der Verdrahtungsschicht (30) angeordnet ist und das zweite Substrat (21) der Druckerfassungskomponente (2) auf dem mittleren Rahmen (8) angeordnet ist; oder
wobei das erste Substrat (20) der Druckerfassungskomponente (2) auf dem mittleren Rahmen (8) angeordnet ist und das zweite Substrat (21) der Druckerfassungskomponente (2) in der Verdrahtungsschicht (30) angeordnet ist.

4. Berührungsdruckdetektionseinrichtung nach Anspruch 1 oder 2, wobei das Berührungsterminal ferner eine Abschirmungsschicht (9) umfasst und das erste Substrat (20) eine Sendeempfängerelektrode der Druckerfassungskomponente (2) umfasst;
wobei keine Verdrahtungsschicht (30) unter der Abdeckung (3) angeordnet ist, die Abschirmungsschicht (9) zwischen der Abdeckung (3) und dem ersten Substrat (20) angeordnet ist, die Abschirmungsschicht (9) und das erste Substrat (20) unter der Abdeckung (3) angeordnet sind.

5. Berührungsdruckdetektionseinrichtung nach Anspruch 3, wobei das Berührungsterminal ferner eine Abschirmungsschicht (9) umfasst und das erste Substrat (20) eine Sendeempfängerelektrode der Druckerfassungskomponente (2) umfasst;
wobei eine Verdrahtungsschicht (30) unter der Abdeckung (3) angeordnet ist, die Abschirmungsschicht (9) in der Verdrahtungsschicht (30) angeordnet ist und das erste Substrat (20) unter der Verdrahtungsschicht (30) angeordnet ist; oder
wobei die Abschirmungsschicht (9) und das erste Substrat (20) in der Verdrahtungsschicht (30) angeordnet sind und das erste Substrat (20) unter der Abschirmungsschicht (9) angeordnet ist; oder
wobei die Abschirmungsschicht (9) zwischen der Verdrahtungsschicht (30) und dem ersten Substrat (20) angeordnet ist und die Abschirmungsschicht (9) und die Verdrahtungsschicht (30) unter der Abdeckung (3) angeordnet sind.

6. Berührungsdruckdetektionseinrichtung nach einem der Ansprüche 1 bis 5, wobei das zweite Substrat (21) eine Erdungselektrode der Druckerfassungskomponente (2) umfasst und das erste Substrat (20) eine Sendeempfängerelektrode der Druckerfassungskomponente (2) umfasst, wobei das erste Substrat (20) in einer beliebigen der folgenden Formen vorliegt: einer rechteckigen Form, einer rechteckig geformten Mundform, einer Form von zwei verschachtelten rechteckig geformten Mündern und einer Mäanderform.

7. Berührungsdruckdetektionseinrichtung nach einem der Ansprüche 1 bis 5, wobei das erste Substrat (20) und das zweite Substrat (21) parallel zueinander sind und beide eine rechteckige Form aufweisen, wobei das erste Substrat (20) mit einem Antriebskanal der Berührungsreaktionskomponente (1) verbunden ist und das zweite Substrat (21) mit einem Erfassungskanal der Berührungsreaktionskomponente (1) verbunden ist; oder
wobei das erste Substrat (20) eine erste Elektrode (201) und eine zweite Elektrode (202) umfasst, die auf einer gleichen Ebene und in einer Form von zwei verschachtelten rechteckig geformten Mündern angeordnet sind, und das zweite Substrat (21) geerdet ist; oder
wobei das erste Substrat (20) eine erste Elektrode (201) und eine zweite Elektrode (202) umfasst, die auf einer gleichen Ebene und beide in einer E-Form angeordnet sind, wobei die erste Elektrode (201) und die zweite Elektrode (202) vernetzt sind und das zweite Substrat (21) geerdet ist;
wobei die erste Elektrode (201) mit einem Antriebskanal der Berührungsreaktionskomponente (1) verbunden ist und die zweite Elektrode (202) mit einem Erfassungskanal der Berührungsreaktionskomponente (1) verbunden ist.

8. Berührungsterminal, umfassend eine Berührungsanzeigekomponentenbaugruppe, wobei die Berührungsanzeigekomponentenbaugruppe ein Anzeigemodul, ein Berührungsmodul und eine Berührungsdruckdetektionseinrichtung nach einem der Ansprüche 1 bis 7 umfasst;
wobei ein Ende der Berührungsanzeigekomponentenbaugruppe, die eine Druckerfassungskomponente (2) umfasst, über ein Elastomer (42) an dem mittleren Rahmen (8) befestigt ist.

9. Berührungsterminal nach Anspruch 8, wobei die Berührungsdruckdetektionseinrichtung ferner eine Berührungsreaktionskomponente (1) umfasst, die mit der Druckerfassungskomponente (2) verbunden ist;
wobei, wenn sich der variable Spalt zwischen dem ersten Substrat (20) und dem zweiten Substrat (21) aufgrund des darauf ausgeübten Drucks verändert, die Druckerfassungskomponente (2) eine Veränderung der Kapazität aufweist und ein entsprechendes elektrisches Signal ausgibt, und
wobei die Berührungsreaktionskomponente (1) zu Folgendem konfiguriert ist:
Berechnen eines Kapazitätsänderungswerts, der durch den auf die Druckerfassungskomponente (2) ausgeübten Druck erzeugt wird, gemäß dem elektrischen Signal und
Berechnen eines Werts des auf die Druckerfassungskomponente (2) ausgeübten Drucks gemäß dem Kapazitätsänderungswert.

10. Berührungsterminal nach Anspruch 9, wobei die Berührungsreaktionskomponente (1) und ein Fingerabdruckidentifizierungschip (60) des Fingerabdruckidentifizierungsmoduls (6) in einem gleichen physischen Chip integriert sind; oder
wobei die Berührungsreaktionskomponente (1) und ein Berührungschip des Berührungsmoduls in einem gleichen physischen Chip integriert sind.

11. Berührungsdruckdetektionsmodul, das auf die Berührungsdruckdetektionseinrichtung nach einem der Ansprüche 1 bis 7 angewandt wird, umfassend die Druckerfassungskomponente (2) und die Berührungsreaktionskomponente (1), die miteinander verbunden sind;
wobei die Druckerfassungskomponente (2) dazu konfiguriert ist, ein elektrisches Signal, welches aufgrund eines darauf ausgeübten Drucks erzeugt wird, an die Berührungsreaktionskomponente (1) auszugeben; und
wobei die Berührungsreaktionskomponente (1) zu Folgendem konfiguriert ist:
Berechnen eines Kapazitätsänderungswerts, der durch den auf die Druckerfassungskomponente (2) ausgeübten Druck erzeugt wird, gemäß dem elektrischen Signal und
Berechnen eines Werts des auf die Druckerfassungskomponente (2) ausgeübten Drucks gemäß dem Kapazitätsänderungswert; und
Ausgeben eines Auslösesignals von mindestens einem Berührungsereignis;
wobei eine entsprechende Beziehung zwischen einem Druckbereich und einem Berührungsereignis vorher in der Berührungsreaktionskomponente (1) gespeichert wurde und wobei, wenn der Druck einen ersten vorbestimmten Schwellenwert überschreitet, die Berührungsreaktionskomponente (1) das Auslösesignal ausgibt;
wobei das Auslösesignal einen Druckbereich des Werts des Drucks angibt.

12. Fingerabdruckidentifizierung-basierte Berührungseinrichtung, umfassend:
ein Fingerabdruckidentifizierungsmodul (6), einen Steuerchip (7) und das Berührungsdruckdetektionsmodul nach Anspruch 11;
wobei ein Ausgangsanschluss der Berührungsreaktionskomponente (1) mit dem Steuerchip (7) verbunden ist und wobei, wenn das Fingerabdruckidentifizierungsmodul (6) einem Druck von außen unterliegt, der Druck auf die Druckerfassungskomponente (2) des Berührungsdruckdetektionsmoduls übertragen wird;
wobei der Steuerchip (7) zu Folgendem konfiguriert ist:
beim Empfangen des Auslösesignals von dem Berührungsdruckdetektionsmodul, Bestimmen, ob ein Fingerabdruckidentifizierungsvorgang durchzuführen ist, und
Erzeugen einer Fingerabdruckidentifizierungsanweisung, wenn bestimmt wird, dass ein Fingerabdruckidentifizierungsvorgang durchzuführen ist; und
wobei das Fingerabdruckidentifizierungsmodul (6) zu Folgendem konfiguriert ist:
Durchführen des Fingerabdruckidentifizierungsvorgangs beim Empfangen der Fingerabdruckidentifizierungsanweisung und
Senden der identifizierten Fingerabdruckinformationen an den Steuerchip (7).

13. Fingerabdruckidentifizierung-basierte Berührungseinrichtung nach Anspruch 12, wobei das Fingerabdruckidentifizierungsmodul (6) dazu konfiguriert ist,
sich vor dem Empfangen der Fingerabdruckidentifizierungsanweisung in einem Ruhezustand zu befinden;
beim Empfangen der Fingerabdruckidentifizierungsanweisung den Ruhezustand zu verlassen und den Fingerabdruckidentifizierungsvorgang durchzuführen; und
nach dem Senden der identifizierten Fingerabdruckinformationen an den Steuerchip (7) erneut in den Ruhezustand einzutreten.

## Revendications

1. Appareil de détection de pression tactile, comprenant : une protection (3), un module d'identification d'empreinte digitale (6), un composant de réponse tactile (1) et un composant de captation de pression (2) ;
dans lequel le composant de captation de pression (2) et le module d'identification d'empreinte digitale (6) sont agencés sous la protection (3), et le composant de captation de pression (2) est agencé sous le module d'identification d'empreinte digitale (6) ;
le composant de captation de pression (2) comprend un premier substrat (20) et un second substrat (21) qui sont agencés de manière opposée ;
il existe un espace variable entre le premier substrat (20) et le second substrat (21) ; et
lorsque le module d'identification d'empreinte digitale (6) est soumis à une pression externe, la pression est transférée au composant de captation de pression (2) de sorte que l'espace variable entre le premier substrat (20) et le second substrat (21) change en raison de la pression ;
lorsqu'un évidement est formé au niveau d'une surface inférieure de la protection (3), le module d'identification d'empreinte digitale (6) est reçu dans l'évidement, et la protection (3) fournit une interface de recueil d'empreinte digitale pour le module d'identification d'empreinte digitale (6) ;
l'appareil de détection de pression tactile est appliqué à un terminal tactile, le terminal tactile comprend un cadre intermédiaire (8), la protection (3) est un verre de protection d'un écran tactile ;
le premier substrat (20) et le second substrat (21) sont agencés entre la protection (3) et le cadre intermédiaire (8) ;
le module d'identification d'empreinte digitale (6) comprend une puce d'identification d'empreinte digitale (60) et une feuille en acier de renfort ;
la puce d'identification d'empreinte digitale (60) est agencée entre la protection (3) et la feuille en acier de renfort ;
la feuille en acier de renfort est mise à la masse et réutilisée en tant que second substrat (21) du composant de captation de pression (2), et le premier substrat (20) du composant de captation de pression (2) est agencé sur le cadre intermédiaire (8), dans lequel le second substrat (21) comprend une électrode de masse du composant de captation de pression (2) ; ou
la feuille en acier de renfort est reliée au composant de réponse tactile (1) et réutilisée en tant que premier substrat (20) du composant de captation de pression (2), et le second substrat (21) du composant de captation de pression (2) est agencé sur le cadre intermédiaire (8), dans lequel le premier substrat (20) comprend une électrode d'émetteur-récepteur du composant de captation de pression (2).

2. Appareil de détection de pression tactile selon la revendication 1, dans lequel le premier substrat (20) du composant de captation de pression (2) est agencé sur la protection (3) et le second substrat (21) du composant de captation de pression (2) est agencé sur le cadre intermédiaire (8) ; ou
le premier substrat (20) du composant de captation de pression (2) est agencé sur le cadre intermédiaire (8) et le second substrat (21) du composant de captation de pression (2) est agencé sur la protection (3) ; ou
le premier substrat (20) du composant de captation de pression (2) est agencé sur le module d'identification d'empreinte digitale (6) et le second substrat (21) du composant de captation de pression (2) est agencé sur le cadre intermédiaire (8) ; ou
le premier substrat (20) du composant de captation de pression (2) est agencé sur le cadre intermédiaire (8) et le second substrat (21) du composant de captation de pression (2) est agencé sur le module d'identification d'empreinte digitale (6).

3. Appareil de détection de pression tactile selon la revendication 1, dans lequel le terminal tactile comprend en outre une couche de câblage (30), dans lequel la couche de câblage (30) est agencée sous la protection (3) ;
dans lequel le premier substrat (20) du composant de captation de pression (2) est agencé dans la couche de câblage (30) et le second substrat (21) du composant de captation de pression (2) est agencé sur le cadre intermédiaire (8) ; ou
le premier substrat (20) du composant de captation de pression (2) est agencé sur le cadre intermédiaire (8) et le second substrat (21) du composant de captation de pression (2) est agencé dans la couche de câblage (30).

4. Appareil de détection de pression tactile selon la revendication 1 ou 2, dans lequel le terminal tactile comprend en outre une couche de blindage (9), et le premier substrat (20) comprend une électrode d'émetteur-récepteur du composant de captation de pression (2) ;
aucune couche de câblage (30) n'est agencée sous la protection (3), la couche de blindage (9) est agencée entre la protection (3) et le premier substrat (20), la couche de blindage (9) et le premier substrat (20) sont agencés sous la protection (3).

5. Appareil de détection de pression tactile selon la revendication 3, dans lequel le terminal tactile comprend en outre une couche de blindage (9), et le premier substrat (20) comprend une électrode d'émetteur-récepteur du composant de captation de pression (2) ;
une couche de câblage (30) est agencée sous la protection (3), la couche de blindage (9) est agencée dans la couche de câblage (30) et le premier substrat (20) est agencé sous la couche de câblage (30) ; ou
la couche de blindage (9) et le premier substrat (20) sont agencés dans la couche de câblage (30), et le premier substrat (20) est agencé sous la couche de blindage (9) ; ou
la couche de blindage (9) est agencée entre la couche de câblage (30) et le premier substrat (20), et la couche de blindage (9) et la couche de câblage (30) sont agencées sous la protection (3).

6. Appareil de détection de pression tactile selon l'une quelconque des revendications 1 à 5, dans lequel le second substrat (21) comprend une électrode de masse du composant de captation de pression (2) et le premier substrat (20) comprend une électrode d'émetteur-récepteur du composant de captation de pression (2), le premier substrat (20) se présente sous l'une quelconque des formes suivantes : une forme rectangulaire, une forme d'embout de forme rectangulaire, une forme de deux embouts de forme rectangulaire imbriqués, et une forme de méandre.

7. Appareil de détection de pression tactile selon l'une quelconque des revendications 1 à 5, dans lequel le premier substrat (20) et le second substrat (21) sont parallèles l'un à l'autre et sont tous deux de forme rectangulaire, le premier substrat (20) est relié à un canal d'entraînement du composant de réponse tactile (1), et le second substrat (21) est relié à un canal de captation du composant de réponse tactile (1) ; ou
le premier substrat (20) comprend une première électrode (201) et une seconde électrode (202) qui sont agencées dans un même plan et en une forme de deux embouts de forme rectangulaire imbriqués, et le second substrat (21) est mis à la masse ; ou
le premier substrat (20) comprend une première électrode (201) et une seconde électrode (202) qui sont agencées dans un même plan et toutes deux en forme de E, la première électrode (201) et la seconde électrode (202) sont maillées l'une avec l'autre, et le second substrat (21) est mis à la masse ;
dans lequel la première électrode (201) est reliée à un canal d'entraînement du composant de réponse tactile (1), et la seconde électrode (202) est reliée à un canal de captation du composant de réponse tactile (1).

8. Terminal tactile, comprenant un ensemble de composant d'affichage tactile, dans lequel l'ensemble de composant d'affichage tactile comprend un module d'affichage, un module tactile et un appareil de détection de pression tactile selon l'une quelconque des revendications 1 à 7 ;
dans lequel une extrémité de l'ensemble de composant d'affichage tactile, qui comprend un composant de captation de pression (2), est fixée au cadre intermédiaire (8) par le biais d'un élastomère (42).

9. Terminal tactile selon la revendication 8, dans lequel l'appareil de détection de pression tactile comprend en outre un composant de réponse tactile (1) relié au composant de captation de pression (2) ;
dans lequel, lorsque l'espace variable entre le premier substrat (20) et le second substrat (21) change en raison de la pression appliquée sur ceux-ci, le composant de captation de pression (2) présente un changement de capacité et fournit en sortie un signal électrique correspondant, et
dans lequel le composant de réponse tactile (1) est configuré pour :
calculer, selon le signal électrique, une valeur de variation de capacité qui est générée par la pression appliquée sur le composant de captation de pression (2), et
calculer, selon la valeur de variation de capacité, une valeur de la pression appliquée sur le composant de captation de pression (2).

10. Terminal tactile selon la revendication 9, dans lequel le composant de réponse tactile (1) et une puce d'identification d'empreinte digitale (60) du module d'identification d'empreinte digitale (6) sont intégrés dans une même puce physique ; ou
le composant de réponse tactile (1) et une puce tactile du module tactile sont intégrés dans une même puce physique.

11. Module de détection de pression tactile, appliqué à l'appareil de détection de pression tactile selon l'une quelconque des revendications 1 à 7, comprenant le composant de captation de pression (2) et le composant de réponse tactile (1) qui sont reliés l'un à l'autre ;
dans lequel le composant de captation de pression (2) est configuré pour fournir en sortie un signal électrique, qui est généré en raison d'une pression appliquée sur celui-ci, au composant de réponse tactile (1) ; et
dans lequel le composant de réponse tactile (1) est configuré pour :
calculer, selon le signal électrique, une valeur de variation de capacité qui est générée par la pression appliquée sur le composant de captation de pression (2), et
calculer, selon la valeur de variation de capacité, une valeur de la pression appliquée sur le composant de captation de pression (2) ; et
fournir en sortie un signal de déclenchement d'au moins un événement tactile ;
une relation correspondante entre une plage de pression et un événement tactile est stockée au préalable dans le composant de réponse tactile (1), et dans lequel lorsque la pression est supérieure à un premier seuil prédéterminé, le composant de réponse tactile (1) fournit en sortie le signal de déclenchement ;
dans lequel le signal de déclenchement indique une plage de pression de la valeur de la pression.

12. Appareil tactile à identification d'empreinte digitale, comprenant :
un module d'identification d'empreinte digitale (6), une puce de commande (7) et le module de détection de pression tactile selon la revendication 11 ;
dans lequel une borne de sortie du composant de réponse tactile (1) est reliée à la puce de commande (7), et dans lequel lorsque le module d'identification d'empreinte digitale (6) est soumis à une pression externe, la pression est transférée au composant de captation de pression (2) du module de détection de pression tactile ;
dans lequel la puce de commande (7) est configurée pour :
à la réception du signal de déclenchement depuis le module de détection de pression tactile, déterminer s'il faut effectuer une opération d'identification d'empreinte digitale, et
générer une instruction d'identification d'empreinte digitale s'il est déterminé qu'il faut effectuer une opération d'identification d'empreinte digitale ; et
dans lequel le module d'identification d'empreinte digitale (6) est configuré pour :
effectuer l'opération d'identification d'empreinte digitale à la réception de l'instruction d'identification d'empreinte digitale, et
envoyer des informations d'empreinte digitale identifiée à la puce de commande (7).

13. Appareil tactile à identification d'empreinte digitale selon la revendication 12, dans lequel le module d'identification d'empreinte digitale (6) est configuré pour :
se trouver dans un état de sommeil avant la réception de l'instruction d'identification d'empreinte digitale ;
sortir de l'état de sommeil et effectuer l'opération d'identification d'empreinte digitale à la réception de l'instruction d'identification d'empreinte digitale ; et
retourner à l'état de sommeil après l'envoi des informations d'empreinte digitale identifiée à la puce de commande (7).
